# EUROPEAN PATENT APPLICATION

(11) **EP 1 221 665 A1**
(43) Date of publication of application: **10.07.2002**
(21) Application number: 01131012.5
(22) Date of filing: 28.12.2001
(51) Int. Cl.: G06F 17/60

(54) **System for collecting proposals for group tours from the public and for offering these tours**

(30) Priority: 28.12.2000 JP 2000403370
(71) Applicant: NEC CORPORATION, Tokyo (JP)
(72) Inventor: Azani, Takeshi, Minato-ku, Tokyo (JP)
(74) Representative: Betten & Resch

(57) **Abstract**

In a system for publicly inviting a group tour, each tour desiring person registers a desired tour destination or a desired tour plan on a home page opened on an internet site. An administrator of the group tour inviting system groups the tour desiring persons who desire for the same tour destination, to organize a temporary group tour community, or produces an arranged tour plan from a plurality of desired tour plans registered on the home page, to organize a temporary community for a group tour on the basis of the arranged tour plan. A travel agent undertakes the group tour of the same tour destination or the arranged tour plan.

## Description

### Background of the invention

The present invention relates to a group tour inviting system for publicly inviting, on an internet site, tour desiring persons for each tour destination or each tour plan, to organize a temporary group tour community, thereby to provide a more inexpensive group tour having an elevated degree of freedom.

Generally, in a conventional group tour, a travel agent plans a group tour and promotes the group tour by advertisement, and a tour desiring person who had known the group tour, offers entry to the group tour. When the number of tour desiring persons reaches a predetermined number, the travel agent actually performs the group tour in line with the plan of the group tour.

In this case, regardless of whether or not the entrant of the group tour is a member of an already formed group tour, or whether or not the group of the group tour is organized of mutually unknown persons, the entrant selects one tour plan from a plurality of ready-made tour plans proposed by the travel agent, and persons who had selected the same tour plan are grouped to one tour group. Persons included in the same tour group tour in line with the plan proposed by the travel agent.

In addition, it is a conventional practice that, an entry to the group tour is carried out before an office of the travel agent or a representative of the travel agent, or through telephone. An entry using an internet is carried out in connection with reservation of an airline ticket. However, it was not possible to offer entry to the group tour through the internet.

As mentioned above, the conventional group tour is generally that each entrant cannot know what type and what generation are entrants until the entrant actually enters the group of the group tour for touring in group.

Therefore, tourists in the group tour cannot immediately have an affinity, or a time is required until the tourists have some degree of affinity.

Furthermore, it is in some cases that although an entry for the group tour is registered, the group tour was not actually carried out because the number of the entry registered persons is insufficient, with the result that expectancies of each entry registered persons will be broken. In addition, it is in other cases that an individual is not allowed to enter the group tour.

### Brief summary of the invention

Accordingly, it is an object of the present invention to provide a group tour inviting system which has overcome the above mentioned problems of the prior art.

Another object of the present invention is to provide a group tour inviting system allowing each individual to register a desired tour destination or a desired tour plan on an internet site so that a plurality of individuals in common in the desired tour destination or the desired tour plan are grouped to organize a temporary community for a group tour, so as to be able to enjoy the group tour with no inconvenience in the conventional ready-made group tour plan designed by a travel agent.

The above and other objects of the present invention are achieved in accordance with the present invention by a group tour inviting system for publicly inviting a group tour, comprising a process in which each tour desiring person registers a desired tour destination on an internet site, a process in which, persons, who are registered on the internet site and desire for the same tour destination, are grouped to organize a temporary community for a group tour, and a process in which a travel agent undertakes the group tour.

According to another aspect of the present invention, there is provided a group tour inviting system for publicly inviting a group tour, comprising a process in which each tour desiring person registers a desired tour plan on an internet site, a process in which a plurality of desired tour plans registered on the internet site are arranged to produce an arranged tour plan, a process in which a temporary community for a group tour on the basis of the arranged tour plan is organized, and a process in which a travel agent undertakes the group tour.

Specifically, the desired tour plan registered by each tour desiring person includes a portion or all of requirements which are desired by the tour desiring person and which include a tour destination, a tour route, a lodging place, a tour period, a tour schedule, the generation of a tour entrant, the hobby of a tour entrant, the purpose of a tour, a traffic means, and the number of tourists.

Preferably, the arranged tour plan is obtained by deriving a tour plan of a greatest common divisor type from the plurality of desired tour plans registered on the internet site.

In one embodiment, each person who registers the desired tour destination or the desired tour plan on the internet site, pays a predetermined registration fee to an administrator of the group tour inviting system. Additionally or alternatively, each travel agent, who offers the undertaking of the group tour of the same tour destination or the arranged group tour, pays a predetermined registration fee to an administrator of the group tour inviting system.

Furthermore, when the group tour community has actually toured in group, the entrants of the group tour and/or the travel agent who performed the group tour, may be required to pay a predetermined contingent fee to an administrator of the group tour inviting system.

Alternatively, when an agreement for the group tour is reached on the internet between tour entrants of the group tour and the travel agent, the travel agent may give a privilege of a group tour reduction of the tour expense including a fare and a hotel charge, to the tour entrants of the group tour.

With the above mentioned arrangement in accordance with the first aspect of the present invention, each tour desiring person registers, through a user's terminal, a desired tour destination on a home page of the internet opened by the administrator of the group tour inviting system through a home page opening terminal. A group tour community is organized by tour desiring persons who desire a common tour destination. A travel agent offers the undertaking of the group tour of the common tour destination through a travel agent's terminal, and a designated travel agent actually undertakes the group tour so that the group tour is actually realized. Accordingly, a more inexpensive group tour having a high degree of freedom can be realized, in comparison with the conventional ready-made group tour designed by the travel agent.

With the above mentioned arrangement in accordance with the second aspect of the present invention, each tour desiring person registers, through a user's terminal, a desired tour plan on a home page of the internet opened by the administrator of the group tour inviting system through a home page opening terminal. An arranged tour plan is obtained by deriving a tour plan of for example a greatest common divisor type from a plurality of desired tour plans registered on the home page, and a group tour community corresponding to the arranged tour plan is organized. A travel agent offers the undertaking of the arranged group tour through a travel agent's terminal, and a designated travel agent actually undertakes the arranged group tour so that the group tour is actually realized. Accordingly, a more inexpensive group tour having a high degree of freedom can be realized, in comparison with the conventional ready-made group tour designed by the travel agent.

The above and other objects, features and advantages of the present invention will be apparent from the following description of preferred embodiments of the invention with reference to the accompanying drawings.

### Brief description of the drawings

Fig. 1 is a block diagram showing the construction of the group tour inviting system in accordance with the present invention;
Fig. 2 is a flow chart illustrating a process for realizing a group tour in a first embodiment of the group tour inviting system in accordance with the present invention; and
Fig. 3 is a flow chart illustrating a process for realizing a group tour in a second embodiment of the group tour inviting system in accordance with the present invention.

### Detailed description of the invention

### First Embodiment

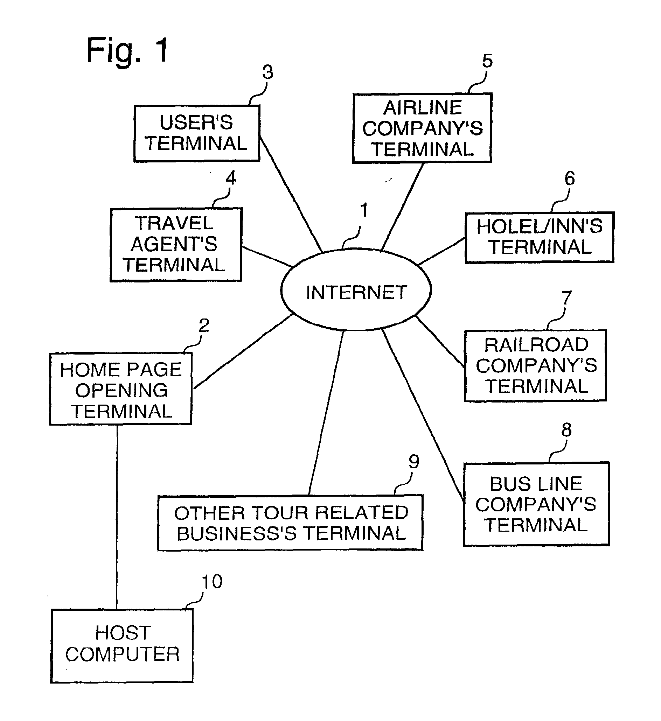

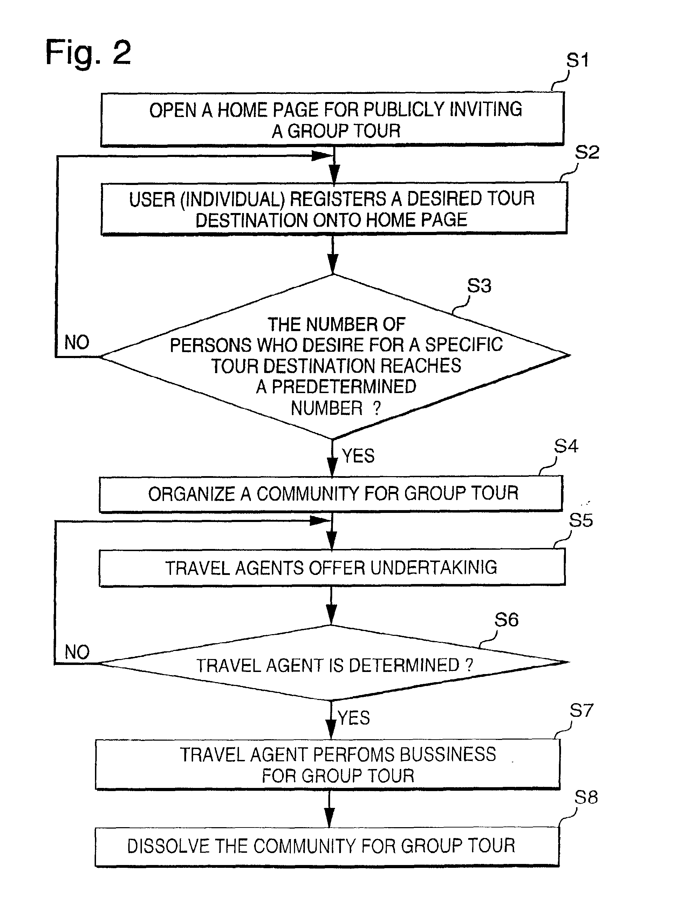

Fig. 1 is a block diagram showing the construction of a first embodiment of the group tour inviting system in accordance with the present invention, and Fig. 2 is a flow chart illustrating a process for realizing a group tour in the first embodiment of the group tour inviting system in accordance with the present invention.

The first embodiment of the group tour inviting system includes a home page opening terminal 2, user's terminals 3, travel agent's terminals 4, airline company's terminals 5, hotel/inn's terminals 6, railroad company's terminals 7, bus line company's terminals 8 and other tour related business's terminals 9, which are mutually connected through an internet 1.

The home page opening terminal 2 is a terminal of an administrator of this group tour inviting system. The administrator of this group tour inviting system opens a group tour inviting home page on a site in the internet 1. The home page opening terminal 2 may be connected to a host computer 10 or may be the host computer 10 itself. The host computer 10 executes the processing which will be described hereinafter, which has to be executed by the administrator of the group tour inviting system.

Each of the user's terminals 3 is a terminal of each group tour desiring user or individual. The user or individual accesses through the user's terminal 3 to the group tour inviting home page, and registers a desired tour destination.

Each of the travel agent's terminals 4 is a terminal of each travel agent, who accesses through this terminal to the group tour inviting home page, and registers an offer of the undertaking of the group tour.

Each of the airline company's terminals 5 is a terminal of each airline company, who proposes through this terminal an air fare in response to a travel agent's inquiry.

Each of the hotel/inn's terminals 6 is a terminal of each hotel or inn, who proposes through this terminal a hotel charge in response to a travel agent's inquiry.

Each of the railroad company's terminals 7 is a terminal of each railroad company, who proposes through this terminal a railroad fare in response to a travel agent's inquiry.

Each of the bus line company's terminals 8 is a terminal of each bus line company, who proposes through this terminal a bus line fare in response to a travel agent's inquiry.

Each of the other tour related business's terminals 9 is a terminal of each tour related business entity, who proposes, through this terminal, various expenses, for example, a guide charge, an admission fee or a charge-for-using for an installation, a group tour insurance, and others, in response to a travel agent's inquiry.

Now, a process for realizing a group tour in the first embodiment of the group tour inviting system in accordance with the present invention will be described with reference to Figs. 1 and 2.

Through the home page opening terminal 2, the administrator of the group tour inviting system opens a group tour inviting home page on a web in the internet 1 (Step S1). A group tour desiring person, who saw this group tour inviting home page, access through the user's terminal 3 to the group tour inviting home page, and registers a desired tour destination on the group tour inviting home page (Step S2).

The administrator of the group tour inviting system totalizes the group tour desiring persons for each of different desired tour destinations. When the number of the group tour desiring persons who desire the same tour destination reaches a predetermined number (Step S3), a temporary community is organized from the group tour desiring persons who desire the same tour destination, and the temporary group tour community is indicated on the group tour inviting home page (Step S4).

On the other hand, when a travel agent has known the establishment of the temporary community for group tour desiring persons from the group tour inviting home page, the travel agent reviews various conditions required for realizing the group tour, on the basis of the details indicated on the group tour inviting home page. If necessary, the travel agent accesses the airline company's terminal 5 to request an estimation of an air fare, and accesses the hotel/inn's terminal 6 to request an estimation of a hotel charge. Further, if necessary, the travel agent accesses the bus line company's terminal 8 to request an estimation of an bus fare, and accesses the other tour related business's terminal 8 to request an estimation of various expenses, for example, a guide charge, an admission fee or a charge-for-using for an installation, a group tour insurance, and others. On the basis of the estimated expenses thus obtained and/or the estimated expenses the travel agent already holds, the travel agent calculates an expense of the group tour, and proposes the group tour expense together with a detailed group tour plan, on the group tour inviting home page (Step S5).

When a plurality of travel agents make an offer, the administrator of the group tour inviting system selects an optimum travel agent from the plurality of travel agents, and determines the selected travel agent as an undertaker for the group tour (Step S6). The determined travel agent is publicly indicated on the group tour inviting home page. Generally, a travel agent proposing the most inexpensive tour expense is selected from the plurality of travel agents, but if necessary, the optimum travel agent is determined by considering not only the proposed tour expense but also other factors such as reliability or experience.

Thereafter, the travel agent determined as the undertaker actually provides the group tour to the desired tour destination, for persons included in the temporary community of group tour desiring persons who desire the same tour destination (Step S7). If the group tour is completed, the administrator of the group tour inviting system dissolves the temporary community of group tour desiring persons (Step S8).

As mentioned above, in this embodiment of the group tour inviting system, each individual can register a desired tour destination on the internet web by use of a personal computer in home or in office or a personal digital assistant. As a result, a group tour community is organized for each different tour destination. Accordingly, for a variety of desired tour destinations, an inexpensive group tour having a high degree of freedom can be realized.

### Second Embodiment

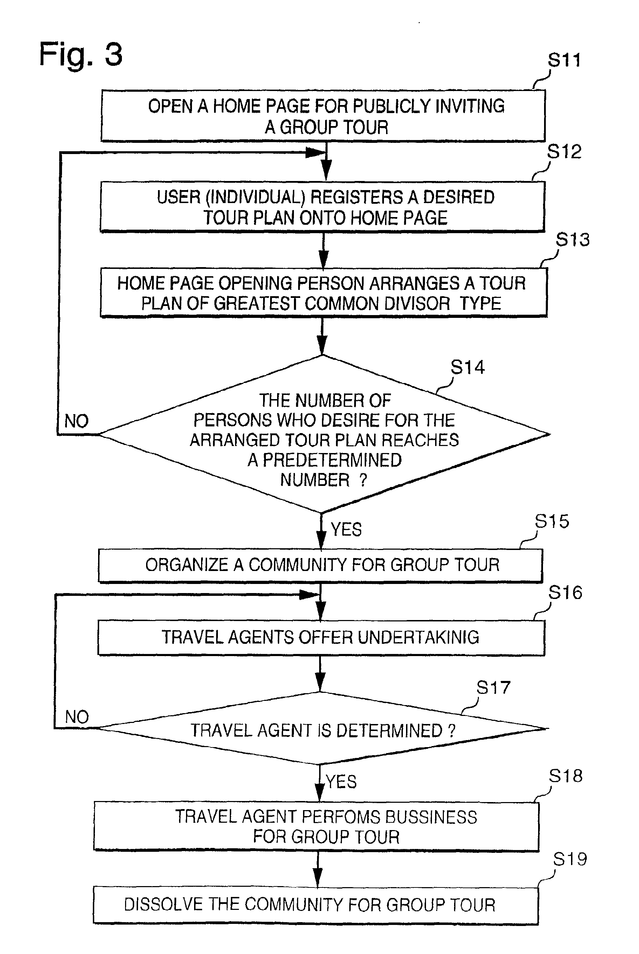

Fig. 3 is a flow chart illustrating a process for realizing a group tour in a second embodiment of the group tour inviting system in accordance with the present invention.

The second embodiment of the group tour inviting system is similar to the first embodiment of the group tour inviting system shown in Fig. 1, which includes the home page opening terminal 2, the user's terminals 3, the travel agent's terminals 4, the airline company's terminals 5, the hotel/inn's terminals 6, the railroad company's terminals 7, the bus line company's terminals 8 and the other tour related business's terminals 9, which are mutually connected through the internet 1.

But, the second embodiment of the group tour inviting system is different from the first embodiment of the group tour inviting system in that, through the user's terminal 3, a group tour desiring person registers a desired tour plan, which includes all requirements which are desired by the tour desiring person and which include a tour destination, a tour route, a lodging place, a tour period, a tour schedule, the generation of a tour entrant, the hobby of a tour entrant, the purpose of a tour, a traffic means, and the number of tourists.

Now, a process for realizing a group tour in the second embodiment of the group tour inviting system in accordance with the present invention will be described with reference to Fig. 3.

Through the home page opening terminal 2, the administrator of the group tour inviting system opens a group tour inviting home page on a web in the internet 1 (Step S11). A group tour desiring person, who saw this group tour inviting home page, access through the user's terminal 3 to the group tour inviting home page, and registers a desired tour plan on the group tour inviting home page (Step S12).

The administrator of the group tour inviting system adjusts and arranges a plurality of registered desired tour plans which are similar to one another in the above mentioned requirements, to produce an arranged tour plan by deriving a tour plan of a greatest common divisor type from the plurality of registered desired tour plans. Then, the arranged tour plan is indicated on the group tour inviting home page (Step S13). The arranged tour plan can be produced in a software manner. In addition, the production of the arranged tour plan is not limited to the derivation of the tour plan of a greatest common divisor type, but can be carried out by giving different weights to different factors of the above mentioned requirements, respectively.

If a group tour desiring person, who saw the arranged tour plan on the group tour inviting home page, desires entry to the arranged tour plan, the group tour desiring person registers the group tour desiring person's entry. When the number of group tour desiring persons who desire the arranged tour plan reaches a predetermined number (Step S14), a temporary community of group tour desiring persons having a common tour plan is organized and indicated on the group tour inviting home page (Step S15).

On the other hand, when a travel agent has known the establishment of the temporary group tour community from the group tour inviting home page, the travel agent calculates an expense of the group tour, similarly to the first embodiment, and proposes the group tour expense together with a detail group tour plan, on the group tour inviting home page (Step S16).

Thereafter, similarly to the first embodiment, when a plurality of travel agents make an offer, the administrator of the group tour inviting system selects an optimum travel agent from the plurality of travel agents, and determines the selected travel agent as an undertaker for the group tour (Step S17). Then, the travel agent determined as the undertaker actually provides the group tour to the arranged tour plan, for persons included in the temporary community of group tour desiring persons who desired the arranged tour plan (Step S18). If the group tour is completed, the administrator of the group tour inviting system dissolves the temporary group tour community (Step S19).

As mentioned above, in this embodiment of the group tour inviting system, each individual can register a desired tour plan on the internet web by use of a personal computer in home or in office or a personal digital assistant. As a result, a group tour community is organized for each arranged tour plan. Accordingly, for a variety of desired tour destinations, an inexpensive group tour having a high degree of freedom can be realized.

In the above mentioned group tour inviting system, since a group tour agreement is achieved on the home page in the internet, it is possible to enjoy a privilege of a group tour reduction in connection with the air fare, the lodging expense, the railroad fare, the bus fare, the guide charge, the admission fee or the charge-for-using for installation, the group tour insurance. As a result, the tour expense can be reduced.

In this group tour inviting system, a person who registers the desired tour destination or the desired tour plan, pays a predetermined registration fee to the administrator of the group tour inviting system who opens the group tour inviting home page. Additionally or alternatively, a travel agent, who offers the undertaking of the group tour for the temporary group tour community established on the home page, pays a predetermined registration fee to the administrator of the group tour inviting system.

Furthermore, when the group tour agreement is achieved on the home page, or when the group tour community has actually toured in group, the entrants of the group tour and/or the travel agent who performed the group tour (ordinarily, only the travel agent), pays a predetermined contingent fee to an administrator of the group tour inviting system.

The group tour can be exemplified by a group tour which is constituted of college teachers, researchers and students attending an academic society meeting or conference and which is maintained during only the period of meeting or conference. By using the group tour inviting system in accordance with the present invention, a group tour community can be organized by inviting academic society meeting attendants on the home page in the internet.

The invention has thus been shown and described with reference to the specific embodiments. However, it should be noted that the present invention is in no way limited to the details of the illustrated structures but changes and modifications may be made within the scope of the appended claims.

For example, in the first embodiment for the same tour destination, for the same group tour community, a plurality of group tour plans are designed on the basis of a tour period, a tour schedule, the generation of a tour entrant, the hobby of a tour entrant, and the purpose of a tour, so that, on the internet web, each individual discretely selects one from the plurality of group tour plans and registers to enter the selected group tour plan, and the group tour plan, for which the number of entry registered persons has reached a predetermined number, will be actually performed.

In the second embodiment, when a plurality of desired tour plans are arranged to produce an arranged tour plan, it is possible to produce a plurality of arranged tour plans, which are different from one other, bit by bit, in a common divisor type, for the same group tour community, so that each individual included in the same group tour community discretely selects one from the plurality of arranged tour plans and registers to enter the selected arranged tour plan, and the arranged tour plan, for which the number of entry registered persons has reached a predetermined number, will be actually performed.

In the above description, the present invention is applied to the group tour, but is in no way limited to the group tour. It would be apparent to persons skilled in the art that, if the present invention can be applied to purchase of any article of trade or a theatergoing or concert-going, the number of consumers or entrants can be increased with the result that the purchase cost or the ticket cost may be reduced.

As mentioned above, according to the group tour inviting system in accordance with the present invention, if each tour desiring individual registers a desired tour destination or a desired tour plan on a web, a more inexpensive group tour having a high degree of freedom can be realized, in comparison with the conventional ready-made group tour designed by the travel agent.

## Claims

1. A group tour inviting system for publicly inviting a group tour, comprising a process in which each tour desiring person registers a desired tour destination on an internet site, a process in which, persons, who are registered on the internet site and desire for the same tour destination, are grouped to organize a temporary community for a group tour, and a process in which a travel agent undertakes the group tour.

2. A group tour inviting system, claimed in Claim 1, wherein each person who registers said desired tour destination on said internet site, pays a predetermined registration fee to an administrator of the group tour inviting system.

3. A group tour inviting system, claimed in Claim 1, wherein each travel agent, who offers the undertaking of the group tour of the same tour destination, pays a predetermined registration fee to an administrator of the group tour inviting system.

4. A group tour inviting system, claimed in Claim 1, wherein when the group tour community has actually toured in group, the entrants of said group tour and/or the travel agent who performed said group tour pays a predetermined contingent fee to an administrator of the group tour inviting system.

5. A group tour inviting system, claimed in Claim 1, wherein when an agreement for the group tour is reached on the internet between tour entrants of the group tour and the travel agent, the travel agent gives a privilege of a group tour reduction of the tour expense including a fare and a hotel charge, to the tour entrants of the group tour.

6. A group tour inviting system for publicly inviting a group tour, comprising a process in which each tour desiring person registers a desired tour plan on an internet site, a process in which a plurality of desired tour plans registered on the internet site are arranged to produce an arranged tour plan, a process in which a temporary community for a group tour on the basis of the arranged tour plan is organized, and a process in which a travel agent undertakes the group tour.

7. A group tour inviting system, claimed in Claim 6 wherein the desired tour plan registered by each tour desiring person includes a portion or all of requirements which are desired by the tour desiring person and which include a tour destination, a tour route, a lodging place, a tour period, a tour schedule, the generation of a tour entrant, the hobby of a tour entrant, the purpose of a tour, a traffic means, and the number of tourists.

8. A group tour inviting system, claimed in Claim 6, wherein the arranged tour plan is obtained by deriving a tour plan of a greatest common divisor type from the plurality of desired tour plans registered on the internet site.

9. A group tour inviting system, claimed in Claim 6, wherein each person who registers said desired tour plan on said internet site, pays a predetermined registration fee to an administrator of the group tour inviting system.

10. A group tour inviting system, claimed in Claim 6, wherein each travel agent, who offers the undertaking for the arranged group tour, pays a predetermined registration fee to an administrator of the group tour inviting system.

11. A group tour inviting system, claimed in Claim 6, wherein when the group tour community has actually toured in group, the entrants of said group tour and/or the travel agent who performed said group tour pays a predetermined contingent fee to an administrator of the group tour inviting system.

12. A group tour inviting system, claimed in Claim 6, wherein when an agreement for the group tour is reached on the internet between tour entrants of the group tour and the travel agent, the travel agent gives a privilege of a group tour reduction of the tour expense including a fare and a hotel charge, to the tour entrants of the group tour.
